Europäisches Patentamt

European Patent Office

Office européen des brevets

(11) Publication number: **0 412 518 A2**

# EUROPEAN PATENT APPLICATION

(21) Application number: 90115196.9

(22) Date of filing: 07.08.90

(51) Int. Cl.⁵: **C08L 23/12**, //(C08L23/12, 51:06),(C08L23/12,23:08)

(30) Priority: 08.08.89 US 390735

(43) Date of publication of application:
**13.02.91 Bulletin 91/07**

(84) Designated Contracting States:
**AT BE CH DE FR GB IT LI NL SE**

(71) Applicant: **UNION CARBIDE CHEMICALS AND PLASTICS COMPANY, INC.**
**39 Old Ridgebury Road**
**Danbury Connecticut 06817-0001(US)**

(72) Inventor: **Rifi, Mahmoud Rashad**
**28 Dawson Road**
**Kendall Park, New Jersey 08824(US)**

(74) Representative: **Weinhold, Peter, Dr. et al**
**Patentanwälte Dipl.-Ing. G. Dannenberg Dr. P. Weinhold Dr. D. Gudel Dipl.-Ing. S. Schubert Dr. P. Barz Siegfriedstrasse 8 D-8000 München 40(DE)**

(54) **Thermoplastic olefins.**

(57) A composition useful in the preparation of thermoplastic olefins comprising:
(a) isotactic polypropylene;
(b) a copolymer of ethylene and propylene grafted with a hydrolyzable silane or a terpolymer of ethylene, propylene, and a hydrolyzable silane; and
(c) a silanol condensation catalyst.

EP 0 412 518 A2

## THERMOPLASTIC OLEFINS

### Technical Field

This invention relates to thermoplastic olefins and, more particularly, to a blend of isotactic polypropylene and a copolymer of ethylene and propylene.

### Background Art

Thermoplastic olefin or TPO are terms generally applied to a blend of isotactic polypropylene with amorphous ethylene/propylene copolymers (EPM) or with ethylene/propylene/diene terpolymers (EPDM). The EPDM is crosslinked through the diene unsaturation to provide products having good toughness and chemical resistance characteristics. Overall, certain commercial thermoplastic olefins based on EPDM have a good balance of mechanical and chemical properties, which give these products utility in wire and cable, hose, and gasket applications. It has been proposed to substitute amorphous EPM for the EPDM because EPM is less expensive; however, attempts to crosslink the EPM with an organic peroxide in the presence of the isotactic polypropylene lead to chain scission of the polypropylene and to the production of thermoplastic olefins with inferior properties.

### Disclosure of the Invention

An object of this invention, therefore, is to provide a blend of isotactic polypropylene and EPM wherein (i) crosslinking of the EPM can be affected without chain scission and (ii) the resulting thermoplastic olefin has properties, which are at least equivalent to commercial thermoplastic olefins base on isotactic polypropylene and crosslinked EPDM.

Other objects and advantages will become apparent hereinafter.

According to the present invention, the above object is met by a composition useful in the preparation of thermoplastic olefins comprising:

(a) isotactic polypropylene;

(b) a copolymer of ethylene and propylene grafted with a hydrolyzable silane or a terpolymer of ethylene, propylene, and hydrolyzable silane; and

(c) a silanol condensation catalyst.

### Detailed Description

The isotactic polypropylene is conventional and can be prepared by a process such as the one described in United States patent 4,304,891. The isotactic polypropylene is usually the homopolymer.

The copolymer of ethylene and propylene is also conventional and can be prepared by a process such as the one described in United States patent 4,302,566. The weight ratio of ethylene to propylene can be in the range of about 1:1 to about 4:1, and is preferably in the range of about 1.5:1 to about 3:1.

Hydrolyzable silane grafted EPM can be prepared by the technique described below. In this copolymer, the portion attributed to the silane is present in an amount of about 0.5 percent to about 10 percent by weight based on the weight of the copolymer and is preferably incorporated into the copolymer in an amount of about 0.5 to about 4 percent by weight. The silane used to modify the copolymer can have the following structural formula:

$CH_2 = CH-(CH_2)_a-Si(OR)_3$

wherein R is an alkyl group having 1 to 10 carbon atoms; each R can be the same or different; and a is an integer from 0 to 10. It should be pointed out that the upper limit for R and a can be higher than 10 carbon atoms, the only limit being the bounds of practicality. Examples of these silanes are vinyltrialkoxy silanes such as vinyltrimethoxy silane, vinyltriethoxy silane, vinylisopropoxy silane, and vinylethoxydimethoxy

2

silane, and alkyltirmethoxy silane. Generally speaking, any unsaturated monomeric silane having one or more hydrolyzable groups is suitable. If slower water cure or better shelf stability is desired, vinyl triisobutyoxy silane or vinyl tris-(2-ethyl-hexoxy) silane can be used.

A free radical generator or catalyst is used in the preparation of the silane grafted copolymer. Among the most useful free radical generators are dicumyl peroxide, lauroyl peroxide, azobisisobutyronitrile, benzoyl peroxide, tertiary butyl perbenzoate, di(tertiary butyl) peroxide, cumene hydroperoxide, 2,5-dimethyl-2,5 di (t-butyl-peroxy) hexyne, 2,5-dimethyl-2, 5-di(t-butylperoxy)-hexane, tertiary butyl hydroperoxide, and isopropyl percarbonate. The organic peroxides are preferred. About 0.001 to about 5 percent by weight of free radical generator based on the weight of the copolymer can be used, preferably about 0.001 to about 0.3 percent by weight.

A typical process for preparing a hydrolyzable silane grafted EPM and a typical technique for blending and curing the isotactic polypropylene and the silane grafted EPM are described in example 1 below.

Various other processes for preparing silane grafted copolymers and numerous unsaturated silanes suitable for use in preparing these polymers and bearing hydrolyzable groups such as alkoxy, oxyaryl, oxyaliphatic, and halogen are mentioned in United States patents 3,075,948; 4,412,042; 4,413,066; and 4,593,071. These silanes are also useful in the preparation of the ethylene/propylene/silane terpolymer.

A terpolymer of ethylene, propylene, and a hydrolyzable silane can be prepared by the process described in United States patent 4,413,066. The proportions of the terpolymer attributed to the comonomers are about as follows:

|  | weight percent | |
|---|---|---|
|  | broad | preferred |
| ethylene | 40 to 80 | 53 to 70 |
| propylene | 15 to 60 | 25 to 40 |
| silane | 5 to 10 | 2 to 7 |

The density of the hydrolyzable silane grafted EPM and the EPM/hydrolyzable silane terpolymer can be in the range of about 0.860 to about 0.890 gram per cubic centimeter and is preferably in the range of about 0.860 to about 0.875 gram per cubic centimeter; the flow index as measured under ASTM D-1238 at 230°C and 440 psi is in the range of about 10 to about 200 and is perferably in the range of about 15 to about 60; and the amount of the grafted EPM and EPM/hydrolyzable silane terpolymer is in the range of about 15 to about 80 percent by weight based on the total weight of the blend of isotactic polypropylene and grafted copolymer or terpolymer, and is preferably in the rang eof about 20 to about 75 percent by weight.

The curing or crosslinking of these ethylene/propylene copolymers and terpolymers, which contain a hydrolyzable silane, is effected by exposing the polymers to moisture in the presence of isotactic polypropylene and a silanol condensation catalysts. Examples of useful silanol condensation catalysts are the metal carboxylates such as dioctyltin maleate, dibutyltin dilaurate, stannous acetate, stannous octoate, lead napthenate, zinc octoate, and iron 2-ethyl hexoate. The silanol condensation catalysts can be introduced into the composition in conventional amounts, about 0.1 to about 0.5 percent by weight based on the weight of the silane. A preferred amount of catalyst is in the range of about 0.01 to about 0.3 percent by weight.

The concentration of the silane in the EPM affects the degree of crosslinking of the grafted EPM and the EPM terpolymer. This, in turn, affects the properties of the thermoplastic olefin, i.e., the blend of EPM with isotactic polypropylene. Thus, the higher the concentration of silane, the greater the degree of crosslinking; the lower the flow index and elongation; and the greater the oil resistance (ASTM no. 3) at 100°C for 168 hours.

Conventional additives can be added to the blend of isotactic polypropylene/hydrolyzable silane modified EPM prior to the addition of the silanol condensation catalyst. The amount of additive is usually in the range of about 0.01 to about 50 percent based on the weight of the resin. Useful additives are antioxidants, ultraviolet absorbers, antistatic agents, pigments, dyes, fillers, slip agents, fire retardants, plasticizers, processing aids, lubricants, stabilizers, and smoke inhibitors.

The patents mentioned in this specification are incorporated by reference herein.

The invention is illustrated by the following examples.

## Example 1

A typical technique for preparing a hydrolyzable silane grafted EPM (hereinafter referred to as Technique I) is as follows : the EPM is mixed and fluxed in a Brabender mixing head at about 130° C; vinyl trimethoxy silane is then added slowly and the components mixed thoroughly. Dicumyl peroxide is added while maintaining the temperature at 150° C. The mixing is continued for 3 to 5 minutes. At this time, the temperature is raised to about 180° C, and the mixing is continued for 5 to 10 minutes. The grafted product is then discharged or it can be blended with isotactic polypropylene in the same mixing head.

A typical technique for blending/curing (hereinafter referred to as Technique II) is as follows: isotactic polypropylene is mixed and fluxed at about 180° C in a Brabender mixing head. EPM grafted with vinyl trimethoxy silane as in Technique I is added slowly to achieve a thorough mix. A silanol condensation catalyst, dibutyltin dilaurate, is then added in an amount of 0.03 percent by weight based on the weight of the silane, and mixing and fluxing is continued for about 5 minutes. The crosslinking is effected by the moisture present in the atmosphere. The product is then discharged.

The EPM used in Technique I has a density of 0.877 gram per cubic centimeter and a flow index of 15.

The hydrolyzable silane grafted EPM prepared by Technique I has a flow index of 15.7 (2.0 percent by weight of vinyl trimethoxy silane and 0.2 percent by weight dicumyl peroxide, both percentages by weight based on the weight of the EPM, are used in Technique I).

The isotactic polypropylene used in Technique II has a melt flow of 3.5; xylene solubles of 3.5 percent; and a flow index of 670.

The blend used in Technique II contains a ratio of 30 parts by weight of the above isotactic polypropylene to 70 parts by weight of the grafted EPM prepared by Technique I. The blend has a flow index of 56. With the addition of 0.03 percent by weight (based on the weight of the silane) of dibutyltin dilaurate, the flow index changes to 2. The difference in flow indices indicates crosslinking.

## Examples 2 to 4

Example 1 is repeated to prepare one blend for each of examples 2, 3, and 4, except that the isotactic polypropylene has a flow index of 600 and the EPM, before grafting, has a flow index of 20 and a density of 0.877 gram per cubic centimeter.

The variables and the properties of each blend are as follows:

| Examples | 2 | 3 | 4 |
|---|---|---|---|
| | (weight percent) | | |
| dicumyl peroxide | 0.1 | 0.2 | 0.4 |
| vinyl trimethoxy silane | 1.0 | 2.0 | 4.0 |
| Properties | | | |
| Flow Index | 60 | 10 | 1.5 |
| tensile modulus (psi) | 10,000 | 10,000 | 8,000 |
| tensile strength (psi) | 600 | 900 | 1,000 |
| elongation (%) | 200 | 130 | 75 |
| Notes: | | | |

1. Flow Index is measured under ASTM, D-1238 at 230°C and 440 psi.

2. Tensile Modulus is measured under ASTM D-638 and is reported in psi.

3. Tensile strength is measured under ASTM 412 and is reported in psi.

4. Elongation is measured under ASTM D-412 and is reported in percent.

5. Melt Flow is measured under ASTM D-1238 at 44 psi and 230°C.

6. Xylene solubles are defined as the fraction that stays in solution after the polypropylene sample is dissolved in hot xylene and the solution is allowed to cool to 23°C.

## Claims

1. A composition comprising:
   (a) isotactic polypropylene;
   (b) 1) a copolymer of ethylene and propylene grafted with a hydrolyzable silane or
   2) a terpolymer of ethylene, propylene, and a hydrolyzable silane; and
   (c) a silanol condensation catalyst.

2. The composition defined in claim 1 wherein the hydrolyzable silane is a vinyl trialkoxy silane.

3. The composition defined in at least one of the claims 1 to 2 wherein the silanol condensation catalyst is a metal carboxylate.

4. The composition defined in at least one of the claims 1 to 3 wherein the amount of component (b) 1) or 2) is in the range of about 15 to about 80 percent by weight based on the total weight of components (a) and (b) 1) or 2).

5. The composition defined in at least one of the claims 1 to 4 wherein the silane in component (b) 1) is present in an amount of about 0.5 percent to about 10 percent by weight based on the weight of component (b) 1).

6. The composition defined in at least one of the claims 1 to 4 wherein the silane in component (b) 2) is present in an amount of about 5 to about 10 percent by weight based on the weight of component (b) 2).

7. The composition defined in at least one of the claims 1 to 6 wherein the silanol condensation catalyst is present in an amount of about 0.1 percent to about 0.5 percent by weight based on the weight of the silane.

8. The composition defined in at least one of the claims 1 to 7 wherein the weight ratio of ethylene to propylene in the component (b) 1) or 2) is in the range of about 1:1 to about 4:1.

9. The composition defined in at least one of the claims 1 to 8 wherein component (b) 1) or 2) is crosslinked.

10. The composition defined in claim 1 wherein components (a) and (b) 1) or 2) are blended and component (b) is crosslinked.

11. An electrical conductor coated with the composition defined in at least one of the claims 1 to 10.

12. A gasket or hose comprising the composition defined in at least one of the claims 1 to 10.

13. A composition comprising:

(a) isotactic polypropylene;

(b) 1) a copolymer of ethylene and propylene grafted with a silane having the following structural formula:

$$CH_2 = CH\text{-}(CH2)_a\text{-}Si(OR)_3$$

wherein R is an alkyl group having 1 to 10 carbon atoms; each R can be the same or different; and a is an integer from 0 to 10; or 2) a terpolymer of ethylene, propylene, and said silane; and

(c) a metal carboxylate.

14. The composition defined in claim 13 wherein the silane of (b) 1) or 2) is vinyltrimethoxy silane.

15. A process for the preparation of a thermoplastic olefin comprising admixing the composition defined in at least one of the claims 1 to 14 in the presence of moisture.

16. The process defined in claim 15 wherein component (b) is 1) a copolymer of ethylene and propylene grafted with a hydrolyzable silane or 2) a terpolymer of ethylene, propylene, and a hydrolyzable silane.

17. The process defined in at least one of the claims 15 to 16 wherein the silanol condensation catalyst is a metal carboxylate.

18. The process defined in at least one of the claims 15 to 17 wherein (i) the amount of component (b) is in the range of about 15 to about 80 percent by weight based on the total weight of components (a) and (b); (ii) the weight ratio of ethylene to propylene in component (b) is in the range of about 1:1 to about 4:1; and (iii) the silanol condensation catalyst is present in an amount of about 0.1 percent to about 0.5 percent by weight based on the weight of the silane.